(19) Europäisches Patentamt
European Patent Office
Office européen des brevets

(11) **EP 4 598 198 B1**

(12) **EUROPEAN PATENT SPECIFICATION**

(45) Date of publication and mention
of the grant of the patent:
**22.04.2026 Bulletin 2026/17**

(21) Application number: **22960277.6**

(22) Date of filing: **30.09.2022**

(51) International Patent Classification (IPC):
*H04L 1/1607* (2023.01)   *H04L 1/1829* (2023.01)
*H04W 72/12* (2023.01)

(52) Cooperative Patent Classification (CPC):
**H04L 1/1685; H04L 1/1861; H04L 1/1864;
H04W 72/12**

(86) International application number:
**PCT/CN2022/123216**

(87) International publication number:
**WO 2024/065654 (04.04.2024 Gazette 2024/14)**

(54) **FEEDBACK INFORMATION DETERMINATION METHOD AND APPARATUS, DEVICE, AND STORAGE MEDIUM**

VERFAHREN UND VORRICHTUNG ZUR BESTIMMUNG VON RÜCKKOPPLUNGSINFORMATIONEN, VORRICHTUNG UND SPEICHERMEDIUM

PROCÉDÉ ET APPAREIL DE DÉTERMINATION D'INFORMATIONS DE RETOUR, DISPOSITIF ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.08.2025 Bulletin 2025/32**

(73) Proprietor: **GUANGDONG OPPO MOBILE TELECOMMUNICATIONS CORP., LTD.**
**Dongguan, Guangdong 523860 (CN)**

(72) Inventors:
• **LIN, Yanan**
**Dongguan, Guangdong 523860 (CN)**
• **LIANG, Bin**
**Dongguan, Guangdong 523860 (CN)**
• **ZHANG, Yi**
**Dongguan, Guangdong 523860 (CN)**
• **XU, Jing**
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(56) References cited:
EP-A1- 2 381 716       WO-A2-2022/154591
CN-A- 113 498 585     CN-A- 114 287 163
CN-A- 115 118 382     US-A1- 2015 195 062
US-A1- 2022 045 801

• FUJITSU: "Discussion on HARQ-ACK codebook and HARQ feedback timing", 3GPP TSG RAN WG1 MEETING #91, R1-1719614, 17 November 2017 (2017-11-17), XP051368827

## Description

## TECHNICAL FIELD

The present disclosure relates to the technical field of communications, and in particular, relates to a method and an apparatus for determining feedback information.

## RELATED ART

In some practices, in a case where downlink control information (DCI) is used to schedule a plurality of physical downlink shared channels (PDSCHs), the DCI needs a great resource overhead. United States Patent Application No. US 2022/0045801 A1 discloses a wireless communication method, which is performed by a User Equipment for transmitting a Hybrid Automatic Repeat Request-Acknowledgment (HARQ-ACK) codebook, and includes receiving a first Radio Resource Control (RRC) configuration including at least one parameter; receiving a DCI format; determining a first Type-3 HARQ-ACK codebook size and a second Type-3 HARQ-ACK codebook size based on the at least one parameter; and transmitting the HARQ-ACK codebook based on the DCI format and one of the first Type-3 HARQ-ACK codebook size and the second Type-3 HARQACK codebook size.

## SUMMARY

Embodiments of the present disclosure provide a method and an apparatus for determining feedback information. The technical solutions are as follows. The invention is defined by the appended set of claims.

According to some embodiments of the present disclosure, a method for determining feedback information is provided. The method is applicable to a terminal device, and includes:

receiving first DCI, wherein the first DCI includes a first information field and a target information field; and

determining a feedback hybrid automatic repeat request (HARQ)-acknowledgment (ACK) codebook based on the target information field in a case where the first information field instructs that an HARQ-ACK codebook be fed back and N cells include non-scheduled cells, wherein the first DCI is used to schedule a scheduled cell in the N cells, and the target information field corresponds to a first non-scheduled cell in the non-scheduled cells, and the target information field includes a frequency-domain resource assignment (FDRA) field, wherein N is an integer greater than 1.

According to some embodiments of the present disclosure, an apparatus for determining feedback information is provided. The apparatus includes:

a first receiving module, configured to receive first DCI, wherein the first DCI includes a first information field and a target information field; and

a determining module, configured to determine a feedback HARQ-ACK codebook based on the target information field in a case where the first information field instructs that an HARQ-ACK codebook be fed back and N cells include non-scheduled cells, wherein the first DCI is used to schedule a scheduled cell in the N cells, and the target information field corresponds to a first non-scheduled cell in the non-scheduled cells, and the target information field includes an FDRA field, wherein N is an integer greater than 1.

According to some embodiments of the present disclosure, an apparatus for determining feedback information is provided. The apparatus includes:

a second transmitting module, configured to transmit first DCI, wherein the first DCI includes a first information field and a target information field; and

a second receiving module, configured to receive an HARQ-ACK codebook in a case where the first information field instructs that the HARQ-ACK codebook be fed back, wherein the first DCI is used to schedule a scheduled cell in N cells, the HARQ-ACK codebook is determined based on the target information field in a case where the N cells include non-scheduled cells, and the target information field corresponds to a first non-scheduled cell in the non-scheduled cells, and the target information field includes an FDRA field, wherein N is an integer greater than 1.

## BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings for the following description show merely some embodiments of the present disclosure, and persons of ordinary skill in the art may still derive other drawings from these accompanying drawings without creative efforts.

FIG. 1 is a schematic diagram of a system for determining feedback information according to some embodiments of the present disclosure;

FIG. 2 is a schematic flowchart of a method for determining feedback information according to some embodiments of the present disclosure;

FIG. 3 is a schematic flowchart of a method for determining feedback information according to some embodiments of the present disclosure;

FIG. 4 is a schematic flowchart of a method for determining feedback information according to some embodiments of the present disclosure;

FIG. 5 is a schematic flowchart of a method for determining feedback information according to some embodiments of the present disclosure;

FIG. 6 is a schematic flowchart of a method for determining feedback information according to some embodiments of the present disclosure;

FIG. 7 is a schematic flowchart of a method for determining feedback information according to some embodiments of the present disclosure;

FIG. 8 is a schematic flowchart of a method for determining feedback information according to some embodiments of the present disclosure;

FIG. 9 is a block diagram of an apparatus for determining feedback information according to some embodiments of the present disclosure;

FIG. 10 is a block diagram of an apparatus for determining feedback information according to some embodiments of the present disclosure; and

FIG. 11 is a schematic structural diagram of a communication device according to some embodiments of the present disclosure.

## DETAILED DESCRIPTION

For clearer descriptions of the objectives, technical solutions, and advantages of the present disclosure, embodiments of the present disclosure are described in detail hereinafter in conjunction with the accompanying drawings. Embodiments are illustratively described herein and examples thereof are illustrated in the accompanying drawings. Unless otherwise indicated, like reference numerals in different accompanying drawings indicates the same or similar elements in following descriptions of the accompanying drawings. The following exemplary embodiments do not represent all embodiments consistent with the present disclosure, but are merely examples of devices and methods that are consistent with aspects of the present disclosure as detailed in the appended claims.

The terms used in the present disclosure are for describing specific embodiments and are not intended to limit the present disclosure. The terms "a," "an," and "the" in the singular form used in the present disclosure and the appended claims are also intended to include the plural form, unless clearly stated in the context otherwise. It should be further understood that the term "and/or" herein refers to and includes any or all possible combinations of one or more associated and listed items.

It should be understood that although the terms "first," "second," "third," and the like may be used herein to describe various pieces of information in the present disclosure, such information should not be limited to these terms. These terms are only used to distinguish various information of the same type. For example, within the scope of the present disclosure, first information may also be referred to as second information, and similarly, second information may also be referred to as first information. The word "if" as used herein, may be interpreted as "in a case where," "in a case that," "in the case that," "in the case of," or "in response to determining that," depending on the context.

Relevant technologies involved in the embodiments of the present disclosure are described.

## 1) Type-3/enhanced type-3 HARQ-ACK codebook

A new radio (NR) system supports feedback of a type-3 HARQ-ACK codebook and an enhanced type-3 HARQ-ACK codebook.

In a case where the terminal device is configured to support feedback of the type-3 HARQ-ACK codebook, the DCI includes a one-shot HARQ-ACK request information field. In a case where the one-shot HARQ-ACK request information field in the DCI received by the terminal device takes a value of 1, the terminal device generates a type-3 HARQ-ACK codebook. The codebook includes HARQ-ACK information corresponding to all HARQ processes in all downlink carriers configured for the terminal device. In a case where an indicator of a Frequency-domain resource Assignment (FDRA) information field in the DCI received by the terminal device takes a valid value, the DCI further is used to schedule PDSCH transmission in triggering the terminal device to feed back the type-3 HARQ-ACK codebook. In a case where the indicator of the FDRA information field in the DCI received by the terminal device takes an invalid value, the DCI is only used to trigger the terminal device to feed back the type-3 HARQ-ACK codebook, and is not used to schedule PDSCH transmission.

In a case where the terminal device is configured to support feedback of the enhanced type-3 HARQ-ACK codebook, a base station pre-configures M carrier sets or M HARQ process sets for the terminal device using high-layer signaling, and dynamically indicates one of the M carrier sets or M HARQ process sets via the DCI. The enhanced type-3 HARQ-ACK codebook fed back by the terminal device includes HARQ-ACK feedback information of all HARQ processes in carriers corresponding to the indicated set or HARQ-ACK feedback information of all HARQ processes corresponding to the indicated set. The DCI further includes a one-shot HARQ-ACK request information field, and two trigger mechanisms are as follows.

(1) The DCI further includes an enhanced type-3 codebook indicator information field, and the information field has a bit length of $\lceil \log_2(M) \rceil$. $\lceil \ \rceil$ represents rounding upwards.

In a case where the one-shot HARQ-ACK request information field in the DCI received by the terminal device takes a value of 1, the enhanced type-3 codebook indicator information field, and the information field indicates one of the pre-configured M sets, and the terminal device feeds back HARQ-ACK feedback information of all HARQ processes corresponding to the set.

(2) The DCI does not include the enhanced type-3 codebook indicator information field.

In a case where the FDRA information field in the DCI received by the terminal device takes a valid value, the DCI is used to schedule PDSCH transmission, and the terminal device feeds back HARQ-ACK feedback information of all HARQ processes corresponding to a first set in the pre-configured M sets.

In a case where the FDRA information field in the DCI received by the terminal device takes an invalid value, the DCI is not used to schedule PDSCH transmission, a modulation and coding scheme (MCS) information field in the DCI indicates one of the pre-configured M sets, and the terminal device feeds back HARQ-ACK feedback information of all HARQ processes corresponding to the set.

## 2) Retransmission of the HARQ-ACK codebook

In some embodiments, the NR system supports retransmission of the HARQ-ACK codebook. A terminal device is configured to feed back the type-3/enhanced type-3 HARQ-ACK codebook and retransmit the HARQ-ACK codebook concurrently.

For the terminal device configured to retransmit the HARQ-ACK codebook, the DCI is not used to schedule PDSCH transmission and is only used to trigger retransmission of the HARQ-ACK codebook in a case where the terminal device receives the DCI within a slot or a sub-slot n and the one-shot HARQ-ACK request information field in the DCI takes a value of 1. The terminal device determines an integer $l$ with a value ranging from -7 to 24 based on the MCS information field in the DCI, and further determines a type-1 HARQ-ACK codebook (that is, a semi-static HARQ-ACK codebook) or a type-2 HARQ-ACK codebook (that is, a dynamic HARQ-ACK codebook) within a retransmission slot or a sub-slot $s=m-l$.

## 3) Multi-carrier scheduling

In a multi-carrier scheduling project, a piece of DCI schedules PDSCHs/PUSCHs in a plurality of cells. Specifically, a piece of DCI schedules PDSCHs/PUSCHs in at most N cells based on a pre-configured scheduling relationship. Based on actual scheduling needs, a piece of DCI only schedules PDSCH/PUSCH transmissions in part, but not all, of the N cells at one time. In some embodiments, the DCI includes a common one-shot HARQ-ACK request information field configured based on the N cells, and other information fields, for example, the MCS information field, the FDRA information field, the time-domain resource assignment (TDRA) information field, and the like, are independently configured based on part of the N cells.

However, as the DCI that supports multi-carrier scheduling needs a large number of bits, that is, the DCI that supports multi-carrier scheduling has a great overhead, the signaling overhead, the scheduling efficiency, and the triggering flexibility need to be considered in a case where the DCI that supports multi-carrier scheduling is used to trigger feedback of the type-3/enhanced type-3 HARQ-ACK codebooks or retransmission of the HARQ-ACK codebook.

Therefore, the present disclosure provides a method for determining feedback information. The feedback HARQ-ACK codebook is determined based on the target information field corresponding to the first non-scheduled cell in the non-scheduled cells, such that the overhead required by the DCI is effectively reduced, and the scheduling flexibility and the scheduling efficiency are improved.

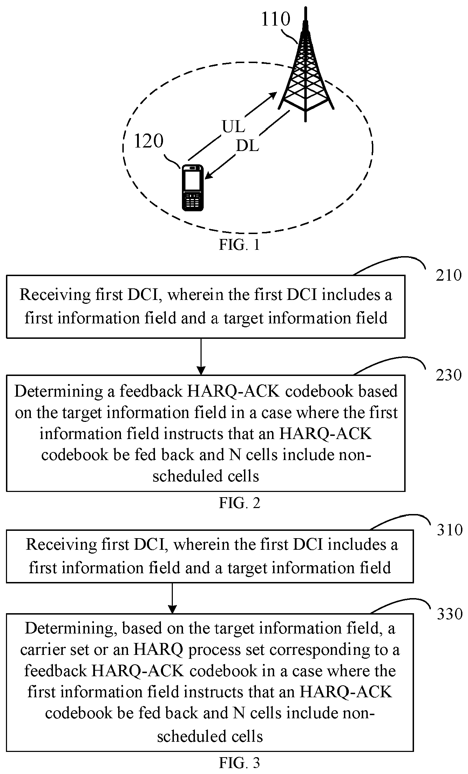

FIG. 1 is a schematic scenario diagram of a system for determining feedback information according to some embodiments of the present disclosure. The system for determining feedback information includes a network device 110 and a terminal device 120, which is not limited in the present disclosure.

The network device 110 according to the present disclosure provide a wireless communication function. The network device 110 includes, but is not limited to, an evolved nodeB (eNB), a radio network controller (RNC), a nodeB (NB), a base station controller (BSC), a base transceiver station (BTS), a home station (for example, a home evolved nodeB or a home nodeB (HNB)), a base band unit (BBU), an access point (AP) in a wireless fidelity (Wi-Fi) system, a wireless relay node, a wireless return node, a transmission point (TP), a transmission and reception point (TRP), a next generation nodeB (gNB) or TRP or TP in a 5th generation (5G) system, one or a set of antenna panels (including a plurality of antenna panels) for a base station in a 5G system, or a network node that constitutes a gNB or a TP (such as a baseband unit (BBU) or a distributed unit (DU)), a base station in a 6th generation (6G) communication system, a core network (CN), a fronthaul, a backhaul, a radio access network (RAN), a network slicing, or a service cell, a primary cell (Pcell), a primary secondary cell (PSCell), a special cell (SpCell), a secondary cell (Scell), a neighborhood cell of the terminal device, or the like.

The terminal device 120 according to the present disclosure is referred to as a user equipment (UE), an access terminal, a subscriber unit, a subscriber station, a mobile station, a mobile console, a remote station, a remote terminal, a mobile device, a subscriber terminal, a terminal, a wireless communication device, a user agent, a user device, or the like. The terminal includes, but is not limited to, handheld devices, wearable devices, in-vehicle devices, Internet of things (IoT) devices, and the like, such as a mobile phone, a tablet, an e-reader, a laptop, a desktop computer, a television, a game console, a mobile Internet device (MID), an augmented reality (AR) terminal, a virtual reality (VR) terminal, a mixed reality (MR) terminal, an extended reality (XR) terminal, a baffle reality (BR) terminal, a cinematic reality (CR) device, a deceive reality (DR) device, a wearable device, a hand shank, an electronic tag, a controller, a wireless terminal in the context of industry control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premise equipment (CPE), and the like.

The network device 110 is in communication with the terminal device 120 over an air interface technology, for example, over a Uu interface.

Illustratively, communications between the network device 110 and the terminal device 120 includes two communication scenarios, that is, an uplink communication scenario and a downlink communication scenario. Signals are transmitted to the network device 110 in the uplink communication scenario, and signals are transmitted to the terminal device 120 in the downlink communication scenario.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an LTE frequency-division duplex (FDD) system, an LTE time-division duplex (TDD) system, an advanced long-term evolution (LTE-A) system, a universal mobile telecommunication system (UMTS), a worldwide interoperability for microwave access (WiMAX) communication system, a 5G mobile communication system, an NR system, an evolution system of the NR system, an LTE-based access to unlicensed spectrum (LTE-U) system, an NR-based access to unlicensed spectrum (NR-U) system, a non-terrestrial network (NTN) system, a wireless local area network (WLAN), a Wi-Fi, a cellular IoT system, a cellular passive IoT system, evolution systems of the 5G NR system, and evolution systems of the 6G NR system. In some embodiments of the present disclosure, the "NR" is also referred to as a 5G NR system or a 5G system. The 5G mobile communication system includes a non-standalone (NSA) network and/or a standalone (SA) network.

The technical solutions according to the embodiments of the present disclosure are also applicable to machine-type communications (MTC), a long-term evolution-machine (LTE-M) network, a device-to-device (D2D) network, a machine-to-machine (M2M) network, an IoT network, or other networks. The IoT network includes, for example, Internet of vehicles. Communication modes in the Internet of vehicles system are collectively referred to as vehicle-to-X (V2X, X represents anything). For example, the V2X includes (vehicle-to-vehicle (V2V) communications, vehicle-to-infrastructure (V2I) communications, vehicle-to-pedestrian (V2P) or vehicle-to-network (V2N) communications, and the like.

It should be noted that in the embodiments of the present disclosure, a cell is equivalent to a carrier. For example, N cells are replaceable by N carriers, at least one cell is replaceable by at least one carrier, a non-scheduled cell is replaceable by a non-scheduled carrier, a scheduled cell is replaceable by a scheduled carrier, and the like.

FIG. 2 is a schematic flowchart of a method for determining feedback information according to some embodiments of the present disclosure. The embodiments are illustrated by an example where the method is applicable to the terminal device 120 shown in FIG. 1. The method includes at least some of the following processes.

In S210, first DCI is received, wherein the first DCI includes a first information field and a target information field.

In some embodiments, the first DCI is used to schedule a scheduled cell in N cells. N is an integer greater than 1.

In some embodiments, the first DCI is not used to schedule a cell. That is, the number of scheduled cells is 0, or no scheduled cell is present. Alternatively, the first DCI is used to schedule at least one cell. That is, at least one cell is scheduled, or at least one scheduled cell is present.

In S230, a feedback HARQ-ACK codebook is determined based on the target information field in a case where the first information field instructs that an HARQ-ACK codebook be fed back and N cells include non-scheduled cells.

In some embodiments, the first DCI is used to schedule the scheduled cell in the N cells, and the target information field corresponds to a first non-scheduled cell in the non-scheduled cells in the N cells.

In some embodiments, the first DCI is used to schedule M cells in the N cells, and the target information field does not indicate configuration information of the M cells. N is an integer greater than 1, and M is an integer.

In some embodiments, in a case where the first information field takes a first value, the first information field instructs that the HARQ-ACK codebook be fed back; and in a case where of the first information field takes a second value, the first information field instructs that the HARQ-ACK codebook not be fed back. For example, in a case where the first information field takes a value of 1, the first information field instructs that the HARQ-ACK codebook be fed back; and in a case where the first information field takes a value of 2, the first information field instructs that the HARQ-ACK codebook not be fed back.

In some embodiments, in a case where the first information field instructs that the HARQ-ACK codebook be fed back, a carrier set or an HARQ process set corresponding to the feedback HARQ-ACK codebook is determined based on the target information field.

In some embodiments, in a case where the first information field instructs that the HARQ-ACK codebook be fed back, an HARQ-ACK codebook corresponding to a first time-domain unit in the feedback HARQ-ACK codebook is determined based on the target information field.

In summary, in the method according to the present disclosure, the feedback HARQ-ACK codebook is determined based on the target information field corresponding to the first non-scheduled cell in the non-scheduled cells in a case where the first DCI used to schedule the scheduled cell in the N cells is received, such that the resource overhead in triggering the terminal device to feed back the HARQ-ACK codebook based on the first DCI is reduced, and the scheduling efficiency of the first DCI is improved.

FIG. 3 is a schematic flowchart of a method for determining feedback information according to some embodiments of the present disclosure. The embodiments are illustrated by an example where the method is applicable to the terminal device 120 shown in FIG. 1. The method includes at least some of the following processes.

In S310, first DCI is received, wherein the first DCI includes a first information field and a target information field.

In some embodiments, the first DCI is used to schedule a scheduled cell in N cells. N is an integer greater than 1.

In some embodiments, the first DCI is not used to schedule a cell. That is, the number of scheduled cells is 0, or no scheduled cell is present. Alternatively, the first DCI is used to schedule at least one cell. That is, at least one cell is scheduled, or at least one scheduled cell is present.

In S330, a carrier set or an HARQ process set corresponding to a feedback HARQ-ACK codebook is determined based on the target information field in a case where the first information field instructs that an HARQ-ACK codebook be fed back and N cells include non-scheduled cells.

In some embodiments, the first DCI is used to schedule the scheduled cell in the N cells, and the target information field corresponds to a first non-scheduled cell in the non-scheduled cells in the N cells.

In some embodiments, the first DCI is used to schedule M cells in the N cells, and the target information field does not indicate configuration information of the M cells. N is an integer greater than 1, and M is an integer.

In some embodiments, the target information field is an information field corresponding to the first non-scheduled cell. The first non-scheduled cell is a cell with a largest cell index or a smallest cell index in the non-scheduled cells.

In some embodiments, the target information field is an information field corresponding to the first non-scheduled cell. The information field corresponding to the first non-scheduled cell includes an FDRA field.

The first non-scheduled cell is a cell with a largest cell index or a smallest cell index in the non-scheduled cells.

In some embodiments, the non-scheduled cells are determined based on a second information field in the first DCI, and the second information field indicates the scheduled cell in the N cells.

In some embodiments, the second information field indicates that the number of scheduled cells in the N cells is 0, that is, N cells do not include a scheduled cell; or, the second information field indicates that the number of scheduled cells in the N cells is greater than 0 and less than N, that is, more than 0 but less than N cells are scheduled in the N cells; or, the second information field indicates that the number of scheduled cells in the N cells is N, that is, N cells are all scheduled in the N cells.

In some embodiments, the non-scheduled cells are determined based on a second information field and a third information field. The second information field indicates the scheduled cell in the N cells, and the third information field indicates time-domain resource assignment information and/or frequency-domain resource assignment information of the scheduled cell.

In some embodiments, the third information field is different from the target information field.

In some embodiments, in a case where the information field indicates the time-domain resource assignment information of the scheduled cell, the target information field is not a TDRA field. For example, the target information field is an MCS field and/or an FDRA field. In a case where the information field indicates the frequency-domain resource assignment information of the scheduled cell, the target information field is not an FDRA field. For example, the target information field is an MCS field and/or a TDRA field. In a case where the information field indicates the time-domain resource assignment information and the frequency-domain resource assignment information of the scheduled cell, the target information field is not a TDRA field and an FDRA field. For example, the target information field is an MCS field.

In some embodiments, the first information field is a one-shot HARQ-ACK request information field.

In some embodiments, in a case where the first information field takes a first value, the first information field instructs that an enhanced type-3 HARQ-ACK codebook be fed back; and in a case where the first information field takes a second value, the first information field instructs that an enhanced type-3 HARQ-ACK codebook not be fed back. For example, in a case where the first information field takes a value of 1, the first information field instructs that the enhanced type-3 HARQ-ACK codebook be fed back; and in a case where the first information field takes a value of 2, the first information field instructs that the enhanced type-3 HARQ-ACK codebook not be fed back.

In some embodiments, in a case where the first information field instructs that the enhanced type-3 HARQ-ACK codebook be fed back, a carrier set or an HARQ process set corresponding to the feedback HARQ-ACK codebook is determined based on the target information field.

In some embodiments, the carrier set or the HARQ process set corresponding to the feedback HARQ-ACK codebook is one of K sets. K is an integer greater than or equal to 1, and the K sets are K carrier sets or K HARQ process sets configured by a network device.

In some embodiments, the first DCI is used to schedule all the N cells. That is, the N cells are scheduled. In this case, the target information field corresponds to at least one scheduled cell in the N cells, and the carrier set or the HARQ process set corresponding to the feedback HARQ-ACK codebook is determined by a default rule.

In some embodiments, in a case where the number of non-scheduled cells is 0, that is, no scheduled cell is present, the feedback HARQ-ACK codebook is determined based on a first set or a last set in K sets. K is an integer greater than or equal to 1, and the K sets are K carrier sets or K HARQ process sets configured by a network device.

In summary, in the method according to the present disclosure, the feedback HARQ-ACK codebook is determined based on the target information field corresponding to the first non-scheduled cell in the non-scheduled cells in a case where the first DCI used to schedule the scheduled cell in the N cells is received, such that the resource overhead in triggering the terminal device to feed back the HARQ-ACK codebook via the first DCI is reduced, and the scheduling efficiency of the first DCI is improved.

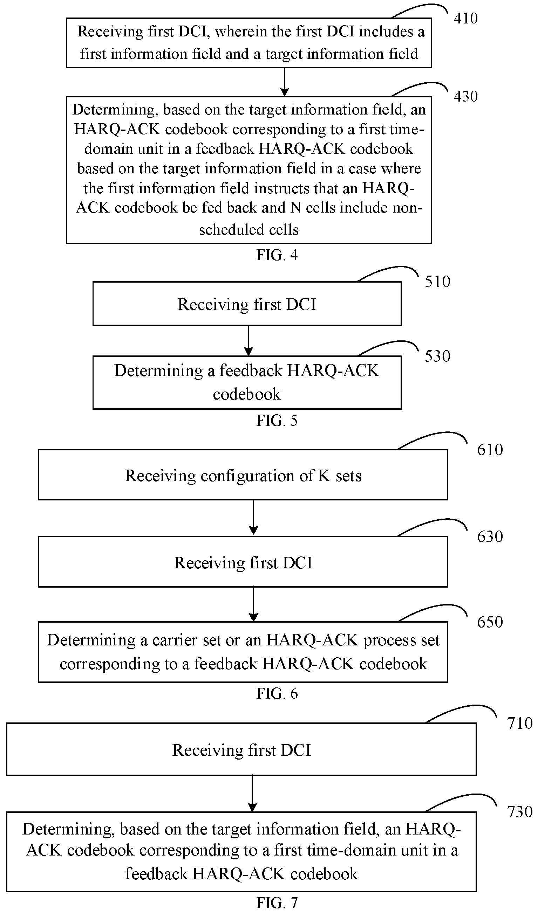

FIG. 4 is a schematic flowchart of a method for determining feedback information according to some embodiments of the present disclosure. The embodiments are illustrated by an example where the method is applicable to the terminal device 120 shown in FIG. 1. The method includes at least some of the following processes.

**In S410,** first DCI is received, wherein the first DCI includes a first information field and a target information field.

In some embodiments, the first DCI is used to schedule a scheduled cell in N cells. N is an integer greater than 1.

In some embodiments, the first DCI is not used to schedule a cell. That is, the number of scheduled cells is 0, or no scheduled cell is present. Alternatively, the first DCI is used to schedule at least one cell. That is, at least one cell is scheduled, or at least one scheduled cell is present.

**In S430,** an HARQ-ACK codebook corresponding to a first time-domain unit in a feedback HARQ-ACK codebook is determined based on the target information field in a case where the first information field instructs that an HARQ-ACK codebook be fed back and N cells include non-scheduled cells.

In some embodiments, the first DCI is used to schedule the scheduled cell in the N cells, and the target information field corresponds to a first non-scheduled cell in the non-scheduled cells in the N cells.

In some embodiments, the first DCI is used to schedule M cells in the N cells, and the target information field does not indicate configuration information of the M cells. N is an integer greater than 1, and M is an integer.

In some embodiments, the target information field is an information field corresponding to the first non-scheduled cell. The first non-scheduled cell is a cell with a largest cell index or a smallest cell index in the non-scheduled cells.

In some embodiments, the target information field is an information field corresponding to the first non-scheduled cell. An information field corresponding to the first non-scheduled cell includes at least one of an MCS field, a TDRA field, or an FDRA field.

The first non-scheduled cell is a cell with a largest cell index or a smallest cell index in the non-scheduled cells.

In some embodiments, the non-scheduled cells are determined based on a second information field in the first DCI, and the second information field indicates the scheduled cell in the N cells.

In some embodiments, the second information field indicates that the number of scheduled cells in the N cells is 0, that is, N cells do not include a scheduled cell; or, the second information field indicates that the number scheduled cells in the N cells is greater than 0 and less than N, that is, more than 0 but less than N cells are scheduled in the N cells; or, the second information field indicates that the number scheduled cells in the N cells is N, that is, N cells are all scheduled in the N cells.

In some embodiments, the non-scheduled cells are determined based on a second information field and a third information field. The second information field indicates the scheduled cell in the N cells, and the third information field indicates time-domain resource assignment information and/or frequency-domain resource assignment information of the scheduled cell.

In some embodiments, the third information field is different from the target information field.

In some embodiments, in a case where the information field indicates the time-domain resource assignment information of the scheduled cell, the target information field is not a TDRA field. For example, the target information field is an MCS field and/or an FDRA field. In a case where the information field indicates the frequency-domain resource assignment information of the scheduled cell, the target information field is not an FDRA field. For example, the target information field is an MCS field and/or a TDRA field. In a case where the information field indicates the time-domain resource assignment information and the frequency-domain resource assignment information of the scheduled cell, the target information field is not a TDRA field and an FDRA field. For example, the target information field is an MCS field.

In some embodiments, the first information field is a one-shot HARQ-ACK request information field.

In some embodiments, in a case where the first information field takes a first value, the first information field instructs that an HARQ-ACK codebook be retransmitted; and in a case where the first information field takes a second value, the first information field instructs that an HARQ-ACK codebook not be retransmitted. For example, in a case where the first information field takes a value of 1, the first information field instructs that the HARQ-ACK codebook be retransmitted; and in a case where the first information field takes a value of 2, the first information field instructs that the HARQ-ACK codebook not be retransmitted.

In some embodiments, in a case where the first information field instructs that the HARQ-ACK codebook be retransmitted, the HARQ-ACK codebook corresponding to the first time-domain unit in the feedback HARQ-ACK codebook is determined based on the target information field.

In some embodiments, the first time-domain unit is determined based on the first DCI and the target information field.

In some embodiments, the first time-domain unit is determined based on a time unit for receiving the first DCI and a value determined based on the target information field.

In some embodiments, the first time-domain unit s is determined based on a difference between the time-domain unit m and a value 1, or, the first time-domain unit s is determined based on a sum of the time-domain unit m and a value 1. The time-domain unit m is a time unit for receiving the first DCI. The value 1 is determined based on the target information field, and is an integer greater than or equal to -7 and less than or equal to 24, that is, $-7 \leq 1 \leq 24$.

In some embodiments, the feedback HARQ-ACK codebook further includes HARQ-ACK information corresponding to the scheduled cell in the N cells, and the scheduled cell is a cell other than the non-scheduled cells in the N cells.

In some embodiments, the time-domain unit includes at least one of a slot or a sub-slot.

In summary, in the method according to the present disclosure, the HARQ-ACK codebook corresponding to the first time-domain unit in the feedback HARQ-ACK codebook is determined based on the target information field corresponding to the first non-scheduled cell in the non-scheduled cells in a case where the first DCI used to schedule the scheduled cell in the N cells is received, such that the resource overhead in triggering the terminal device to feed back the HARQ-ACK codebook based on the first DCI is reduced, and the scheduling efficiency of the first DCI is improved. In addition, compared with the solutions where the PDSCH is not scheduled in a case where the first DCI is used to trigger retransmission of the HARQ-ACK codebook, the scheduling flexibly and the scheduling efficiency of the first DCI are efficiently improved in the embodiments of the present disclosure.

FIG. 5 is a schematic flowchart of a method for determining feedback information according to some embodiments of the present disclosure. The embodiments are illustrated by an example where the method is applicable to the terminal device 120 shown in FIG. 1. The method includes at least some of the following processes.

**In S510,** first DCI is received.

The first DCI is used to schedule a scheduled cell in N cells. N is an integer greater than 1.

In some embodiments, the first DCI is not used to schedule a cell. That is, the number of scheduled cells is 0, or no scheduled cell is present. Alternatively, the first DCI is used to schedule at least one cell. That is, at least one cell is scheduled, or at least one scheduled cell is present.

In some embodiments, the first DCI is used to schedule a PDSCH/PUSCH of the scheduled cell in N cells. The embodiments are illustrated by an example where the first DCI is used to schedule the PDSCH of the scheduled cell in N cells.

The first DCI includes a first information field, and the first information field is a one-shot HARQ-ACK request information field.

In some embodiments, the first DCI further includes a second information field. The non-scheduled cells are determined based on the second information field in the first DCI, and the second information field indicates the scheduled cell in the N cells. The second information field indicates (2T-1) combinations of scheduled cells. T is a bit length of the second information field.

In some embodiments, the first DCI further includes a second information field and a third information field. The non-scheduled cells are determined based on the second information field and the third information field in the first DCI. The second information field indicates the scheduled cell in the N cells, and the third information field indicates time-domain resource assignment information and/or frequency-domain resource assignment information of the scheduled cell. The second information field indicates $2^T$ combinations of scheduled cells. T is a bit length of the second information field.

**In S530,** a feedback HARQ-ACK codebook is determined.

In a case where the first information field takes a first value, the first information field instructs that a type-3 HARQ-ACK codebook be fed back.

Illustratively, N is equal to 4. That is, the first DCI is used to schedule scheduled cells in four cells, that is, a cell 0, a cell 1, a cell 2, and a cell 3.

The first DCI includes a 1-bit first information field, and the first information field takes a value of 1, which instructs the terminal device to feed back the type-3 HARQ-ACK codebook.

In some embodiments, the first DCI further includes the second information field.

For example, the second information field occupies 3 bits, which instructs that the cell not be scheduled. That is, the number scheduled cells is 0. In this case, the first DCI is used to trigger feedback of the type-3 HARQ-ACK codebook, and is not used to schedule PDSCH transmission.

For example, the second information field occupies 3 bits, which instructs that the cell 1 be scheduled. In this case, the first DCI is used to trigger feedback of the type-3 HARQ-ACK codebook, and is further used to schedule PDSCH transmission of the cell 1.

In some embodiments, the first DCI further includes a second information field and a third information field. The second information field indicates the scheduled cell in the N cells, and accounts for 3 bits. As listed in Table 1, the third information field indicates frequency-domain resource assignment information of the scheduled cell, that is, the third information field is an FDRA information field, and accounts for 4 bits.

Table 1 Third information field

| Cell | FDRA information field |
|------|------------------------|
| 0 | FDRA information field 0 |
| 1 | FDRA information field 1 |
| 2 | FDRA information field 2 |
| 3 | FDRA information field 3 |

For example, the second information field indicates the scheduled cell 1. Based on the FDRA information listed in Table 1, the FDRA information field 1 corresponding to the cell 1 takes an invalid value. For example, all values of the FDRA information fields 1 corresponding to the cell 1 are set to 1 or 0. In this case, the first DCI is used to trigger feedback of the type-3 HARQ-ACK codebook, and is not used to schedule PDSCH transmission.

For example, the second information field indicates the scheduled cell 0 and the scheduled cell 1. Based on the FDRA information listed in Table 1, the FDRA information field 1 corresponding to the cell 1 takes an invalid value, and the FDRA information field 1 corresponding to the cell 0 takes a valid value. In this case, the first DCI is used to trigger feedback of the type-3 HARQ-ACK codebook, and is used to schedule PDSCH transmission of the cell 0.

In some embodiments, the first DCI further includes a second information field and a third information field. The second information field indicates the scheduled cell in the N cells, and accounts for 3 bits. As listed in Table 2, the third information field indicates frequency-domain resource assignment information of the scheduled cell, that is, the third information field is an FDRA information field, and accounts for 2 bits.

Table 2 Third information field

| Cell | FDRA information field |
|------|------------------------|
| 0 | FDRA information field 0 |
| 1 | FDRA information field 0 |
| 2 | FDRA information field 1 |
| 3 | FDRA information field 1 |

For example, the second information field indicates the scheduled cell 1. Based on the FDRA information listed in Table 2, the FDRA information field 0 corresponding to the cell 1 takes an invalid value. In this case, the first DCI is used to trigger feedback of the type-3 HARQ-ACK codebook, and is not used to schedule PDSCH transmission.

For example, the second information field indicates the scheduled cell 1 and the scheduled cell 2. Based on the FDRA information listed in Table 2, the FDRA information field 0 corresponding to the cell 1 takes a valid value, and the FDRA information field 1 corresponding to the cell 2 takes an invalid value. In this case, the first DCI is used to trigger feedback of the type-3 HARQ-ACK codebook, and is used to schedule PDSCH transmission of the cell 1.

In summary, in the method according to the present disclosure, the feedback HARQ-ACK codebook is determined based on the first information field in a case where the first DCI used to schedule the scheduled cell in the N cells is received, and the cell scheduled by the first DCI is determined based on the second information field or based on the second information field and the third information field, such that the scheduling efficiency of the first DCI is improved. As trigger of feedback of the HARQ-ACK codebook does not need to be strongly correlated with scheduling of the cell, such that the scheduling flexibility of the first DCI is further improved.

FIG. 6 is a schematic flowchart of a method for determining feedback information according to some embodiments of the present disclosure. The embodiments are illustrated by an example where the method is applicable to the terminal device 120 shown in FIG. 1. The method includes at least some of the following processes.

In S610, configuration of K sets is received.

The K sets are K carrier sets or K HARQ process sets configured by a network device. K is an integer greater than or equal to 1. In some embodiments, serial numbers of the K sets range from 0 to K-1, or from 1 to K.

Illustratively, the terminal device receives configuration of three HARQ process sets. For example, the three sets are an HARQ process set 0, an HARQ process set 1, and an HARQ process set 2.

In S630, first DCI is received.

The first DCI is used to schedule a scheduled cell in N cells. N is an integer greater than 1.

In some embodiments, the first DCI is not used to schedule a cell. That is, the number of scheduled cells is 0, or no scheduled cell is present. Alternatively, the first DCI is used to schedule at least one cell. That is, at least one cell is scheduled, or at least one scheduled cell is present.

In some embodiments, the first DCI is used to schedule a PDSCH/PUSCH of the scheduled cell in N cells. The embodiments are illustrated by an example where the first DCI is used to schedule the PDSCH of the scheduled cell in N cells.

In some embodiments, the first DCI includes a first information field, and the first information field is a one-shot HARQ-ACK request information field.

In some embodiments, the first DCI includes a first information field and a target information field, and the first information field is a one-shot HARQ-ACK request information field.

In some embodiments, the target information field is part of the information field corresponding to the non-scheduled cells in the N cells.

In some embodiments, the target information field corresponds to a first non-scheduled cell in the non-scheduled cells in the N cells.

In some embodiments, the first DCI is used to schedule M cells in the N cells, and the target information field does not indicate configuration information of the M cells. N is an integer greater than 1, and M is an integer.

In some embodiments, the non-scheduled cells are determined based on the second information field in the first DCI, and the second information field indicates the scheduled cell in the N cells. The second information field indicates $(2^T-1)$ combinations of scheduled cells. T is a bit length of the second information field.

In some embodiments, the non-scheduled cells are determined based on the second information field and the third information field in the first DCI. The second information field indicates the scheduled cell in the N cells, and the third information field indicates time-domain resource assignment information and/or frequency-domain resource assignment information of the scheduled cell. The second information field indicates $2^T$ combinations of scheduled cells. T is a bit length of the second information field.

In some embodiments, the target information field is an information field corresponding to the first non-scheduled cell. An information field corresponding to the first non-scheduled cell includes at least one of an MCS field, a TDRA field, or an FDRA field.

The first non-scheduled cell is a cell with a largest cell index or a smallest cell index in the non-scheduled cells.

In some embodiments, the third information field is different from the target information field.

**In S650,** a carrier set or an HARQ-ACK process set corresponding to a feedback HARQ-ACK codebook is determined.

In a case where the first information field takes a first value, the first information field instructs that an enhanced type-3 HARQ-ACK codebook be fed back.

Illustratively, N is equal to 4. That is, the first DCI is used to schedule scheduled cells in four cells, that is, a cell 0, a cell 1, a cell 2, and a cell 3.

The first DCI includes a 1-bit first information field, and the first information field takes a value of 1, which instructs the terminal device to feed back the enhanced type-3 HARQ-ACK codebook.

How to determine the carrier set or the HARQ-ACK process set corresponding to the feedback HARQ-ACK codebook is illustrated hereinafter.

<u>In a first case, the first DCI is not used to schedule all the N cells.</u>

That is, the first case is a case where the N cells include non-scheduled cells. In this case, the carrier set or the HARQ-ACK process set corresponding to the feedback HARQ-ACK codebook is determined based on the target information field.

In some embodiments, the first DCI includes a 3-bit second information field, and the second information field instructs that the cell 1 be scheduled. The non-scheduled cells are a cell 0, a cell 2, and a cell 3. In this case, the first non-scheduled cell is a cell with a smallest cell index in the cell 0, the cell 2, and the cell 3; or, the first non-scheduled cell is a cell with a largest cell index in the cell 0, the cell 2, and the cell 3.

The first DCI includes a 2-bit third information field, as listed in Table 3, and the third information field is a TDRA information field to indicate TDRA information of the cell 0, the cell 1, the cell 2, and the cell 3. Based on the TDRA information listed in Table 3, the TDRA information field 0 corresponding to the cell 1 takes a valid value.

Table 3 Third information field

| Cell | TDRA information field |
|------|------------------------|
| 0 | TDRA information field 0 |
| 1 | |
| 2 | TDRA information field 1 |
| 3 | |

As the third information field is the TDRA information field, the target information field is an MCS information field of the first non-scheduled cell and/or an FDRA information field of the first non-scheduled cell. The embodiments are illustrated by an example where the target information field is the MCS information field of the first non-scheduled cell.

The first DCI includes a 4-bit MCS information field, and the MSC information field indicates MCS information of the cell 0, the cell 1, the cell 2, and the cell 3, as listed in Table 4.

Table 4 Target information field

| Cell | MCS information field |
|------|----------------------|
| 0 | MCS information field 0 |
| 1 | MCS information field 1 |
| 2 | MCS information field 2 |
| 3 | MCS information field 3 |

The target information field is an MCS information field 0 corresponding to the cell 0 or an MCS information field 3 corresponding to the cell 3. The embodiments are illustrated by an example where the target information field is the MCS information field 0 corresponding to the cell 0.

One of the K sets configured by the network device is determined based on a value of the target information field. That is, one of the three HARQ process sets configured by the network device is determined based on a value of the MCS information field 0 corresponding to the cell 0. For example, an HARQ process set 1 configured by the network device is determined based on the value of the MCS information field 0 corresponding to the cell 0.

Thus, the first DCI is used to trigger feedback of the enhanced type-3 HARQ-ACK codebook, the enhanced type-3 HARQ-ACK codebook includes HARQ-ACK information corresponding to all HARQ processes in the HARQ process set 1, and the first DCI is further used to schedule PDSCH transmission of the cell 1.

In a second case, the first DCI is used to schedule all the N cells.

That is, the second case is a case where the N cells do not include non-scheduled cells. In this case, the target information field corresponds to at least one scheduled cell in the N cells, and the carrier set or the HARQ process set corresponding to the feedback HARQ-ACK codebook is determined by a default rule.

In some embodiments, the terminal device generates the enhanced type-3 HARQ-ACK codebook based on HARQ-ACK information corresponding to a first set or a last set in the K sets.

In some embodiments, the first DCI further includes a 3-bit second information field, and the second information field instructs that the cell 0, the cell 1, the cell 2, and the cell 3 be scheduled. Based on the TDRA information fields listed in Table 3, TDRA information fields 0 corresponding to the cell 0 and the cell 1 take valid values, and TDRA information fields 0 corresponding to the cell 2 and the cell 3 take valid values. In this case, the second information field and the third information field indicate that the first DCI instructs that PDSCHs corresponding to the cell 0, the cell 1, the cell 2, and the cell 3 be scheduled, that is, all the N cells.

In this case, the first DCI is used to trigger feedback of the enhanced type-3 HARQ-ACK codebook, and the enhanced type-3 HARQ-ACK codebook includes HARQ-ACK information corresponding to all HARQ processes in the HARQ process set 0 (that is, a first set in the K sets) or HARQ-ACK information corresponding to all HARQ processes in the HARQ process set 2 (that is, a last set in the K sets). The first DCI is further used to schedule PDSCH transmission of the cell 1.

In summary, in the method according to the present disclosure, the carrier set or the HARQ-ACK process set corresponding to the feedback HARQ-ACK codebook is determined based on the target information field corresponding to the first non-scheduled cell in the non-scheduled cells in a case where the first DCI used to schedule the scheduled cell in the N cells is received, such that the resource overhead in triggering the terminal device to feed back the HARQ-ACK codebook based on the first DCI is reduced, and the scheduling efficiency and the scheduling flexibly of the first DCI are improved.

FIG. 7 is a schematic flowchart of a method for determining feedback information according to some embodiments of the present disclosure. The embodiments are illustrated by an example where the method is applicable to the terminal device 120 shown in FIG. 1. The method includes at least some of the following processes.

**In S710,** first DCI is received.

The first DCI is used to schedule a scheduled cell in N cells. N is an integer greater than 1.

In some embodiments, the first DCI is not used to schedule a cell. That is, the number of scheduled cells is 0, or no scheduled cell is present. Alternatively, the first DCI is used to schedule at least one cell. That is, at least one cell is scheduled, or at least one scheduled cell is present.

In some embodiments, the terminal device receives the first DCI within a slot m. Illustratively, m is an integer.

In some embodiments, the terminal device receives the first DCI at a start time of the slot m and/or at an end time of the slot m.

In some embodiments, the first DCI is used to schedule a PDSCH/PUSCH of at least one cell in N cells. The embodiments are illustrated by an example where the first DCI is used to schedule the PDSCH of the at least one cell in N cells.

In some embodiments, the non-scheduled cells are determined based on the second information field in the first DCI, and the terminal device does not expect that the scheduled cells indicated by the second information field are all the N cells. That is, the number of scheduled cells indicated by the second information field is less than N.

In some embodiments, the non-scheduled cells are determined based on the second information field and the third information field in the first DCI, and the terminal device does not expect that the scheduled cells indicated by the second information field and the third information field are all the N cells. That is, the number of scheduled cells jointly indicated by the second information field and the third information field is less than N.

In some embodiments, the first DCI includes a first information field and a target information field, and the first information field is a one-shot HARQ-ACK request information field.

In some embodiments, the target information field is part of the information field corresponding to the non-scheduled cells in the N cells.

In some embodiments, the target information field corresponds to a first non-scheduled cell in the non-scheduled cells in the N cells.

In some embodiments, the first DCI is used to schedule M cells in the N cells, and the target information field does not indicate configuration information of the M cells. N is an integer greater than 1, and M is an integer.

In some embodiments, the non-scheduled cells are determined based on the second information field in the first DCI, and the second information field indicates the scheduled cell in the N cells. The second information field indicates $(2^T-1)$ combinations of scheduled cells. T is a bit length of the second information field.

In some embodiments, the non-scheduled cells are determined based on the second information field and the third information field in the first DCI. The second information field indicates the scheduled cell in the N cells, and the third information field indicates time-domain resource assignment information and/or frequency-domain resource assignment information of the scheduled cell. The second information field indicates $(2^T-1)$ combinations of scheduled cells. T is a bit length of the second information field.

In some embodiments, the target information field is an information field corresponding to the first non-scheduled cell. An information field corresponding to the first non-scheduled cell includes at least one of an MCS field, a TDRA field, or an FDRA field.

The first non-scheduled cell is a cell with a largest cell index or a smallest cell index in the non-scheduled cells.

In some embodiments, the third information field is different from the target information field.

**In S730,** an HARQ-ACK codebook corresponding to a first time-domain unit in a feedback HARQ-ACK codebook is determined the target information field.

In a case where the first information field takes a first value, the first information field instructs that an HARQ-ACK codebook be retransmitted.

Illustratively, N is equal to 4. That is, the first DCI is used to schedule at least one cell in four cells, that is, a cell 0, a cell 1, a cell 2, and a cell 3.

The first DCI includes a 1-bit first information field, and the first information field takes a value of 1, which instructs the terminal device to retransmit the HARQ-ACK codebook.

The first DCI includes a 3-bit second information field, and the second information field instructs that the cell 1 be scheduled. The non-scheduled cells are a cell 0, a cell 2, and a cell 3. In this case, the first non-scheduled cell is a cell with a smallest cell index in the cell 0, the cell 2, and the cell 3; or, the first non-scheduled cell is a cell with a largest cell index in the cell 0, the cell 2, and the cell 3.

The first DCI includes a 2-bit third information field, as listed in Table 3, the third information field is a TDRA information field to indicate TDRA information of the cell 0, the cell 1, the cell 2, and the cell 3. Based on the TDRA information listed in Table 3, the TDRA information field 0 corresponding to the cell 1 takes a valid value.

As the third information field is the TDRA information field, the target information field is an MCS information field of the first non-scheduled cell and/or an FDRA information field of the first non-scheduled cell. The embodiments are illustrated by an example where the target information field is the MCS information field of the first non-scheduled cell.

The first DCI includes a 4-bit MCS information field, and the MSC information field indicates MCS information of the cell 0, the cell 1, the cell 2, and the cell 3, as listed in Table 4.

The target information field is an MCS information field 0 corresponding to the cell 0 or an MCS information field 3 corresponding to the cell 3. The embodiments are illustrated by an example where the target information field is the MCS information field 3 corresponding to the cell 3.

An integer with a value of 1 is determined based on a value of the target information field, that is, a value of the MCS information field 3 corresponding to the cell 3, $-7 \leq 1 \leq 24$.

In some embodiments, the first time-domain unit s is determined based on a difference between the time-domain unit m of the first DCI and a value 1. that is, s=m - 1. s is an integer.

In some embodiments, the first time-domain unit s is determined based on a sum of the time-domain unit m of the first DCI and a value 1. that is, s=m+1. s is an integer.

In this case, the feedback HARQ-ACK codebook triggered by the first DCI includes the HARQ-ACK codebook corresponding to the first time-domain unit s and the HARQ-ACK information corresponding to the cell 1 scheduled by the first DCI. The first DCI is further used to schedule PDSCH transmission of the cell 1.

In some embodiments, the feedback HARQ-ACK codebook triggered by the first DCI, bits of the HARQ-ACK codebook corresponding to the first time-domain unit s are after bits of the HARQ-ACK information corresponding to the cell 1.

In some embodiments, the HARQ-ACK codebook corresponding to the first time-domain unit s is a type-1 HARQ-ACK codebook (that is, a semi-static HARQ-ACK codebook) or a type-2 HARQ-ACK codebook (that is, a dynamic HARQ-ACK codebook).

In some embodiments, the time-domain unit includes at least one of a slot or a sub-slot.

In summary, in the method according to the present disclosure, the HARQ-ACK codebook corresponding to the first time-domain unit in the feedback HARQ-ACK codebook is determined based on the target information field corresponding to the first non-scheduled cell in the non-scheduled cells in a case where the first DCI used to schedule the scheduled cell in the N cells is received, such that the resource overhead in triggering the terminal device to feed back the HARQ-ACK codebook based on the first DCI is reduced, and the scheduling efficiency of the first DCI is improved. In addition, compared with the solutions where the PDSCH is not scheduled in a case where the first DCI is used to trigger retransmission of the HARQ-ACK codebook, the scheduling flexibly and the scheduling efficiency of the first DCI are efficiently improved in the embodiments of the present disclosure.

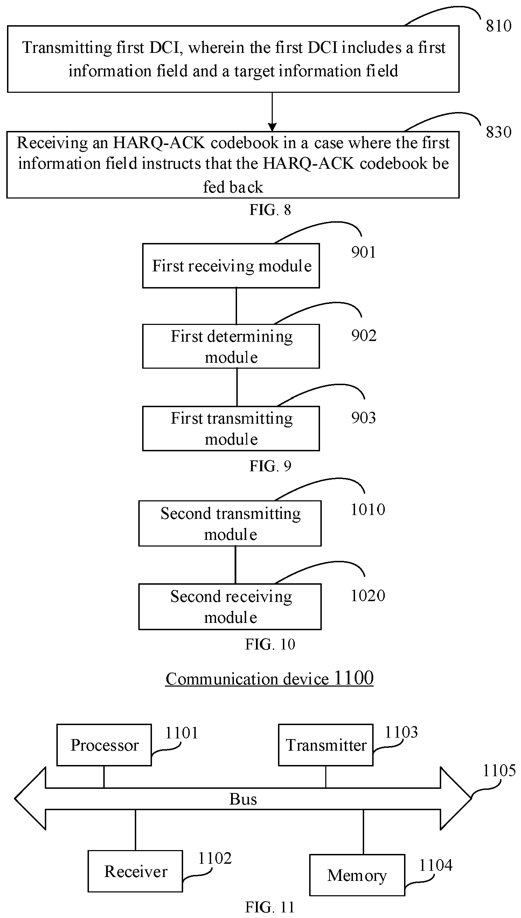

FIG. 8 is a schematic flowchart of a method for determining feedback information according to some embodiments of the present disclosure. The embodiments are illustrated by an example where the method is applicable to the network device 110 shown in FIG. 1. The method includes at least some of the following processes.

In S810, first DCI is transmitted, wherein the first DCI includes a first information field and a target information field.

In some embodiments, the first DCI is used to schedule a scheduled cell in N cells. N is an integer greater than 1.

In some embodiments, the first DCI is not used to schedule a cell. That is, the number of scheduled cells is 0, or no scheduled cell is present. Alternatively, the first DCI is used to schedule at least one cell. That is, at least one cell is scheduled, or at least one scheduled cell is present.

In some embodiments, the first DCI further includes a second information field, and the second information field indicates the scheduled cell in the N cells.

In some embodiments, the first DCI further includes a second information field and a third information field. The second information field indicates the scheduled cell in the N cells, and the third information field indicates time-domain resource assignment information and/or frequency-domain resource assignment information of the scheduled cell.

In S830, an HARQ-ACK codebook is received in a case where the first information field instructs that the HARQ-ACK codebook be fed back.

In some embodiments, the HARQ-ACK codebook is determined based on the target information field by the terminal device.

In some embodiments, the first DCI is used to schedule the scheduled cell in the N cells, and the target information field corresponds to a first non-scheduled cell in the non-scheduled cells in the N cells in a case where the N cells include non-scheduled cells.

In some embodiments, the first DCI is used to schedule M cells in the N cells, and the target information field does not indicate configuration information of the M cells. N is an integer greater than 1, and M is an integer.

In some embodiments, the first DCI is used to schedule all the N cells. That is, the N cells are scheduled. In this case, the target information field corresponds to at least one scheduled cell in the N cells, and the carrier set or the HARQ process set corresponding to the feedback HARQ-ACK codebook is determined by a default rule.

In some embodiments, the HARQ-ACK codebook is a type-3 HARQ-ACK codebook, and includes HARQ-ACK information corresponding to all carrier sets or all HARQ-ACK process sets configured for the terminal device.

In some embodiments, the HARQ-ACK codebook is an enhanced type-3 HARQ-ACK codebook, and includes HARQ-ACK information corresponding to a carrier set or an HARQ-ACK process set configured for the terminal device. The carrier set or the HARQ-ACK process set is one of K sets configured for the terminal device. The K sets are K carrier sets or K HARQ-ACK process sets. K is in integer greater than or equal to 1.

In some embodiments, the HARQ-ACK codebook is a retransmission HARQ-ACK codebook, and includes an HARQ-ACK codebook corresponding to a first time-domain unit and HARQ-ACK information corresponding to a cell scheduled by the first DCI.

In summary, in the method according to the present disclosure, the transmitted first DCI includes the first information field and the target information field to schedule the scheduled cell in the N cells and support the terminal device in determining the feedback HARQ-ACK codebook based on the target information field, such that the resource overhead in triggering the terminal device to feed back the HARQ-ACK codebook based on the first DCI is reduced, and the scheduling efficiency of the first DCI is improved.

FIG. 9 is a block diagram of an apparatus for determining feedback information according to some embodiments of the present disclosure. The apparatus includes at least one of a first receiving module 901, a first determining module 902, and a first transmitting module 903.

The first receiving module 901 is configured to receive first DCI, wherein the first DCI includes a first information field and a target information field; and
the first determining module 902 is configured to determine a feedback HARQ-ACK codebook based on the target information field in a case where the first information field instructs that an HARQ-ACK codebook be fed back and N cells include non-scheduled cells, wherein the first DCI is used to schedule a scheduled cell in the N cells, and the target information fields corresponds to the first non-scheduled cell in the non-scheduled cells in the N cells, wherein N is an integer greater than 1; and the first DCI is used to schedule M cells in the N cells, and the target information field does not indicate configuration information of the M cells. N is an integer greater than 1, and M is an integer.

In some embodiments, the first DCI is not used to schedule a cell. That is, the number of scheduled cells is 0, or no scheduled cell is present in the N cells. Alternatively, the first DCI is used to schedule at least one cell. That is, at least one cell is scheduled, and at least one scheduled cell is present in the N cells.

In some embodiments, the first determining module 902 is configured to determine the non-scheduled cells based on a second information field in the first DCI, wherein the second information field indicates the scheduled cell in the N cells.

In some embodiments, the first determining module 902 is configured to determine the non-scheduled cells based on a second information field and a third information field in the first DCI, wherein the second information field indicates the scheduled cell in the N cells, and the third information field indicates time-domain resource assignment information and/or frequency-domain resource assignment information of the scheduled cell.

In some embodiments, the third information field is different from the target information field.

In some embodiments, the first determining module 902 is configured to determine, based on the target information field, a carrier set or an HARQ process set corresponding to the feedback HARQ-ACK codebook, wherein the target information field is an information field corresponding to the first non-scheduled cell.

In some embodiments, the first receiving module 901 is configured to receive configuration of K sets.

In some embodiments, the carrier set or the HARQ process set corresponding to the feedback HARQ-ACK codebook is one of the K sets, wherein K is an integer greater than or equal to 1, and the K sets are K carrier sets or K HARQ process sets configured by a network device.

In some embodiments, the first determining module 902 is configured to determine the feedback HARQ-ACK codebook based on a first set or a last set in K sets in response to no scheduled cell, wherein K is an integer greater than or equal to 1, and the K sets are K carrier sets or K HARQ process sets configured by a network device.

In some embodiments, the first determining module 902 is configured to determine, based on the target information field, an HARQ-ACK codebook corresponding to a first time-domain unit in the feedback HARQ-ACK codebook, wherein the target information field is an information field corresponding to the first non-scheduled cell.

In some embodiments, the first determining module 902 is configured to determine the first time-domain unit based on the first DCI and the target information field.

In some embodiments, the target information field is an information field corresponding to the first non-scheduled cell, and the first non-scheduled cell is a cell with a largest cell index or a smallest cell index in the non-scheduled cells.

In some embodiments, the target information field is an information field corresponding to the first non-scheduled cell, an information field corresponding to the first non-scheduled cell includes at least one of an MCS field, a TDRA field, or an FDRA field, and the first non-scheduled cell is a cell with a largest cell index or a smallest cell index in the non-scheduled cells.

In some embodiments, the first time-domain unit includes at least one of a slot or a sub-slot.

In some embodiments, the first information field is a one-shot HARQ-ACK request information field.

In some embodiments, the apparatus further includes the first transmitting module 903, configured to transmit an HARQ-ACK codebook, wherein the HARQ-ACK codebook is determined by the first determining module 902.

In summary, in the apparatus according to the present disclosure, the feedback HARQ-ACK codebook is determined based on the target information field corresponding to the first non-scheduled cell in the non-scheduled cells in a case where the first DCI used to schedule the scheduled cell in the N cells is received, such that the resource overhead in triggering the terminal device to feed back the HARQ-ACK codebook based on the first DCI is reduced, and the scheduling efficiency of the first DCI is improved.

FIG. 10 is a block diagram of an apparatus for determining feedback information according to some embodiments of the present disclosure. The apparatus includes at least one of a second transmitting module 1010 and a second receiving module 1020.

The second transmitting module 1010 is configured to transmit first DCI, wherein the first DCI includes a first information field and a target information field, and is used to schedule a scheduled cell in N cells, wherein N is an integer greater than 1.

In some embodiments, the first DCI is not used to schedule a cell. That is, the number of scheduled cells is 0, or no scheduled cell is present in the N cells. Alternatively, the first DCI is used to schedule at least one cell. That is, at least one cell is scheduled, and at least one scheduled cell is present in the N cells.

In some embodiments, the first DCI further includes a second information field, and the second information field indicates the scheduled cell in the N cells.

In some embodiments, the first DCI further includes a second information field and a third information field. The second information field indicates the scheduled cell in the N cells, and the third information field indicates time-domain resource assignment information and/or frequency-domain resource assignment information of the scheduled cell.

In some embodiments, the second receiving module 1020 is configured to receive an HARQ-ACK codebook in a case where the first information field instructs that the HARQ-ACK codebook be fed back.

In some embodiments, the HARQ-ACK codebook is determined based on the target information field in a case where N cells include non-scheduled cells.

In some embodiments, the first DCI is used to schedule a scheduled cell in the N cells, and the target information fields corresponds to the first non-scheduled cell in the non-scheduled cells in the N cells, wherein N is an integer greater than 1; and the first DCI is used to schedule M cells in the N cells, and the target information field does not indicate configuration information of the M cells. N is an integer greater than 1, and M is an integer.

In some embodiments, the first DCI is used to schedule all the N cells. That is, the N cells are scheduled. In this case, the target information field corresponds to at least one scheduled cell in the N cells, and the carrier set or the HARQ process set corresponding to the feedback HARQ-ACK codebook is determined by a default rule.

In some embodiments, the HARQ-ACK codebook is a type-3 HARQ-ACK codebook, and includes HARQ-ACK information corresponding to all carrier sets or all HARQ-ACK process sets configured for the terminal device.

In some embodiments, the second transmitting module 1010 is further configured to transmit configuration of K sets, wherein K sets are K carrier sets or K HARQ process sets.

In some embodiments, the HARQ-ACK codebook is an enhanced type-3 HARQ-ACK codebook, and includes HARQ-ACK information corresponding to a carrier set or an HARQ-ACK process set configured for the terminal device. The carrier set or the HARQ-ACK process set is one of K sets configured for the terminal device. The K sets are K carrier sets or K HARQ-ACK process sets. K is in integer greater than or equal to 1.

In some embodiments, the HARQ-ACK codebook is a retransmission HARQ-ACK codebook, and includes an HARQ-ACK codebook corresponding to a first time-domain unit and HARQ-ACK information corresponding to a cell scheduled by the first DCI.

In summary, in the apparatus according to the present disclosure, the transmitted first DCI includes the first information field and the target information field to schedule the scheduled cell in the N cells and support the terminal device in determining the feedback HARQ-ACK codebook based on the target information field, such that the resource overhead in triggering the terminal device to feed back the HARQ-ACK codebook based on the first DCI is reduced, and the scheduling efficiency of the first DCI is improved.

It should be noted that the apparatus according to above embodiments is only illustrated by the division of above functional modules. In practical applications, above functions can be assigned by different functional modules according to needs. That is, the internal structure of the apparatus is divided into different functional modules to achieve all or part of the functions described above.

Detailed operation methods of various modules of the apparatus according to the embodiments are detailed in the method embodiments, which are thus not described herein any further.

FIG. 11 is a schematic structural diagram of a communication device (a terminal device or a network device) according to some embodiments of the present disclosure. The communication device 1100 includes: a processor 1101, a receiver 1102, a transmitter 1103, a memory 1104, and a bus 1105.

The processor 1101 includes one or more processing cores, and achieves various functional applications and information processing by running software programs and modules. In some embodiments, the processor 1101 is configured to implement functions and processes of the first determining module 902.

The receiver 1102 and the transmitter 1103 are practiced as a communication assembly. The communication assembly is a communication chip. In some embodiments, the receiver 1102 is configured to achieve functions and processes of the first receiving module 901 and/or the second receiving module 1020. In some embodiments, the transmitter 1103 is configured to achieve functions and processes of the first transmitting module 903 and/or the second transmitting module 1010.

The memory 1104 is connected to the processor 1101 via the bus 1105. The memory 1104 is configured to store one or more instructions, and the processor 1101 is configured to load and execute the one or more instructions to perform various processes in the above method embodiments.

In addition, the memory 1104 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the receiver 1102 receives signals/data separately, the processor 1101 controls the receiver 1102 to receive signals/data, the processor 1101 requests the receiver 1102 to receive signals/data, or, the processor 1101 cooperates with the receiver 1102 to receive signals or data.

In some embodiments, the transmitter 1103 transmits signals/data separately, the processor 1101 controls the transmitter 1103 to transmit signals or data, the processor 1101 requests the transmitter 1103 to transmit signals/data, or, the processor 1101 cooperates with the transmitter 1103 to transmit signals or data.

Some embodiments of the present disclosure further provide a computer-readable storage medium. The computer-readable storage medium stores one or more programs, which when loaded and run by a processor, causes the processor to perform the method for determining feedback information in the above method embodiments.

Some embodiments of the present disclosure further provide a chip. The chip includes programable logical circuity and/or one or more program instructions, wherein the chip, when running on a communication device, is configured to perform the method for determining feedback information in the above method embodiments.

Some embodiments of the present disclosure further provide a computer program product. The computer program product, when running on a processor of a computer device, causes the computer device to perform the method for receiving and transmitting DCI in the above method embodiments.

Some embodiments of the present disclosure further provide a computer program. The computer program includes one or more computer instructions, which when loaded and executed by a processor of a computer device, cause the computer device to perform the method for receiving and transmitting DCI in the above method embodiments.

It should be understood by those skilled in the art that in the above one or more embodiments, functions described in the embodiments of the present disclosure are practiced by the hardware, the software, the firmware or any combinations thereof. In a case where the functions are practiced by the software, the functions are stored in the computer-readable storage medium or are determined as one or more instructions or codes in the computer-readable storage medium for transmission. The computer-readable storage medium includes a computer storage medium and a communication medium, and the communication medium includes any medium facilitating transmission of the computer program from one place to another place. The storage medium is any available medium accessible by a general or specific computer.

Described above are merely exemplary embodiments of the present disclosure, and are not intended to limit the present disclosure.

**Claims**

1. A method for determining feedback information, applicable to a terminal device, the method comprising:

    receiving first downlink control information, DCI, (210), wherein the first DCI comprises a first information field and a target information field; and
    determining a feedback hybrid automatic repeat request, HARQ,-acknowledgment, ACK, codebook based on the target information field in a case where the first information field instructs that an HARQ-ACK codebook be fed back and N cells comprise non-scheduled cells, wherein the first DCI is used to schedule a scheduled cell in the N cells, and N is an integer greater than 1;

    **characterized in that**, the target information field corresponds to a first non-scheduled cell in the non-scheduled cells, and the target information field comprises a frequency-domain resource assignment, FDRA, field.

2. The method according to claim 1, wherein the non-scheduled cells are determined based on a second information field and a third information field in the first DCI, wherein the second information field indicates the scheduled cell in the N cells, and the third information field indicates frequency-domain resource assignment information of the scheduled cell.

3. The method according to claim 1 or 2, wherein determining the feedback HARQ-ACK codebook based on the target information field comprises: determining, based on the target information field, an HARQ-ACK codebook corresponding to a first time-domain unit in the feedback HARQ-ACK codebook.

4. The method according to claim 1, wherein the first non-scheduled cell is a cell with a smallest cell index in the non-scheduled cells.

5. The method according to claim 1, wherein an information field corresponding to the first non-scheduled cell comprises a modulation and coding scheme, MCS, field.

6. An apparatus for determining feedback information, comprising:

    a first receiving module, (901), configured to receive first downlink control information, DCI, wherein the first DCI comprises a first information field and a target information field; and
    a determining module, configured to determine a feedback hybrid automatic repeat request, HARQ-acknowledgment, ACK, codebook based on the target information field in a case where the first information field instructs that an HARQ-ACK codebook be fed back and N cells comprise non-scheduled cells, wherein the first DCI is used to schedule a scheduled cell in the N cells, wherein N is an integer greater than 1;
    **characterized in that**, the target information field corresponds to a first non-scheduled cell in the non-scheduled cells, and the target information field comprises a frequency-domain resource assignment, FDRA, field.

7. The apparatus for determining feedback information according to claim 6, wherein the non-scheduled cells are determined based on a second information field and a third information field in the first DCI, wherein the second information field indicates the scheduled cell in the N cells, and the third information field indicates frequency-domain resource assignment information of the scheduled cell.

8. The apparatus for determining feedback information according to claim 6 or 7, wherein the determining module is further configured to:
determine, based on the target information field, an HARQ-ACK codebook corresponding to a first time-domain unit in the feedback HARQ-ACK codebook.

9. The apparatus for determining feedback information according to claim 6, wherein the first non-scheduled cell is a cell with a smallest cell index in the non-scheduled cells.

10. The apparatus for determining feedback information according to claim 6, wherein an information field corresponding to the first non-scheduled cell comprises a modulation and coding scheme, MCS, field.

11. An apparatus for determining feedback information, comprising:

a second transmitting module, (1010), configured to transmit first downlink control information, DCI, wherein the first DCI comprises a first information field and a target information field; and
a second receiving module, configured to receive a hybrid automatic repeat request, HARQ-acknowledgment, ACK, codebook in a case where the first information field instructs that the HARQ-ACK codebook be fed back, wherein the first DCI is used to schedule a scheduled cell in the N cells, the HARQ-ACK codebook is determined based on the target information field in a case where N cells comprise non-scheduled cells, wherein N is an integer greater than 1;
**characterized in that**, the target information field corresponds to a first non-scheduled cell in the non-scheduled cells, and the target information field comprises a frequency-domain resource assignment, FDRA, field.

12. The apparatus for determining feedback information according to claim 11, wherein the first DCI further comprises a second information field and a third information field, wherein the second information field indicates the scheduled cell in the N cells, and the third information field indicates frequency-domain resource assignment information of the scheduled cell.

13. The apparatus for determining feedback information according to claim 11, wherein the HARQ-ACK codebook comprises an HARQ-ACK codebook corresponding to a first time-domain unit.

14. The apparatus for determining feedback information according to claim 11, wherein the first non-scheduled cell is a cell with a smallest cell index in the non-scheduled cells.

15. The apparatus for determining feedback information according to claim 11, wherein an information field corresponding to the first non-scheduled cell comprises a modulation and coding scheme, MCS, field.

**Patentansprüche**

1. Verfahren zum Bestimmen von Rückmeldungsinformationen, anwendbar auf ein Endgerät, wobei das Verfahren umfasst:

Empfangen einer ersten Downlink-Steuerinformation, DCI, (210), wobei die erste DCI ein erstes Informationsfeld und ein Zielinformationsfeld umfasst; und
Bestimmen eines Rückmeldungs-Hybrid-Automatic-Repeat-Request-, HARQ,-Acknowledgment-, ACK,-Codebuchs basierend auf dem Zielinformationsfeld in einem Fall, in dem das erste Informationsfeld anweist, dass ein HARQ-ACK-Codebuch rückgemeldet werden soll, und N Zellen nicht eingeplante Zellen umfassen, wobei die erste DCI verwendet wird, um eine eingeplante Zelle in den N Zellen einzuplanen, und N eine ganze Zahl größer als 1 ist;
**dadurch gekennzeichnet, dass** das Zielinformationsfeld einer ersten nicht eingeplanten Zelle in den nicht eingeplanten Zellen entspricht und das Zielinformationsfeld ein Frequenzbereichsressourcenzuweisungs-, FDRA,-Feld umfasst.

2. Verfahren nach Anspruch 1, wobei die nicht eingeplanten Zellen basierend auf einem zweiten Informationsfeld und einem dritten Informationsfeld in der ersten DCI bestimmt werden, wobei das zweite Informationsfeld die eingeplante Zelle in den N Zellen angibt und das dritte Informationsfeld Frequenzbereichsressourcenzuweisungsinformationen der eingeplanten Zelle angibt.

3. Verfahren nach Anspruch 1 oder 2, wobei das Bestimmen des Rückmeldungs-HARQ-ACK-Codebuchs basierend auf dem Zielinformationsfeld umfasst:
Bestimmen, basierend auf dem Zielinformationsfeld, eines HARQ-ACK-Codebuchs, das einer ersten Zeitbereichseinheit in dem Rückmeldungs-HARQ-ACK-Codebuch entspricht.

4. Verfahren nach Anspruch 1, wobei die erste nicht eingeplante Zelle eine Zelle mit einem kleinsten Zellenindex in den nicht eingeplanten Zellen ist.

5. Verfahren nach Anspruch 1, wobei ein Informationsfeld, das der ersten nicht eingeplanten Zelle entspricht, ein Modulations- und Codierschema-, MCS,-Feld umfasst.

6. Vorrichtung zum Bestimmen von Rückmeldungsinformationen, umfassend:

ein erstes Empfangsmodul, (901), das konfiguriert ist, eine erste Downlink-Steuerinformation, DCI, zu empfangen, wobei die erste DCI ein erstes Informationsfeld und ein Zielinformationsfeld umfasst; und
ein Bestimmungsmodul, das konfiguriert ist, ein Rückmeldungs-Hybrid-Automatic-Repeat-Request-, HARQ-Acknowledgment-, ACK,-Codebuch basierend auf dem Zielinformationsfeld in einem Fall zu bestimmen, in dem das erste Informationsfeld anweist, dass ein HARQ-ACK-Codebuch rückgemeldet werden soll, und N Zellen nicht eingeplante Zellen umfassen, wobei die erste DCI verwendet wird, um eine eingeplante Zelle in den N Zellen einzuplanen, wobei N eine ganze Zahl größer als 1 ist;
**dadurch gekennzeichnet, dass** das Zielinformationsfeld einer ersten nicht eingeplanten Zelle in den nicht eingeplanten Zellen entspricht und das Zielinformationsfeld ein Frequenzbereichsressourcenzuweisungs-, FDRA,-Feld umfasst.

7. Vorrichtung zum Bestimmen von Rückmeldungsinformationen nach Anspruch 6, wobei die nicht eingeplanten Zellen basierend auf einem zweiten Informationsfeld und einem dritten Informationsfeld in der ersten DCI bestimmt werden, wobei das zweite Informationsfeld die eingeplante Zelle in den N Zellen angibt und das dritte Informationsfeld Frequenzbereichsressourcenzuweisungsinformationen der eingeplanten Zelle angibt.

8. Vorrichtung zum Bestimmen von Rückmeldungsinformationen nach Anspruch 6 oder 7, wobei das Bestimmungsmodul ferner konfiguriert ist:
basierend auf dem Zielinformationsfeld ein HARQ-ACK-Codebuch zu bestimmen, das einer ersten Zeitbereichseinheit in dem Rückmeldungs-HARQ-ACK-Codebuch entspricht.

9. Vorrichtung zum Bestimmen von Rückmeldungsinformationen nach Anspruch 6, wobei die erste nicht eingeplante Zelle eine Zelle mit einem kleinsten Zellenindex in den nicht eingeplanten Zellen ist.

10. Vorrichtung zum Bestimmen von Rückmeldungsinformationen nach Anspruch 6, wobei ein Informationsfeld, das der ersten nicht eingeplanten Zelle entspricht, ein Modulations- und Codierschema-, MCS,-Feld umfasst.

11. Vorrichtung zum Bestimmen von Rückmeldungsinformationen, umfassend:

ein zweites Sendemodul, (1010), das konfiguriert ist, eine erste Downlink-Steuerinformation, DCI, zu senden, wobei die erste DCI ein erstes Informationsfeld und ein Zielinformationsfeld umfasst; und
ein zweites Empfangsmodul, das konfiguriert ist, ein Hybrid-Automatic-Repeat-Request-, HARQ-Acknowledgment-, ACK,-Codebuch in einem Fall zu empfangen, in dem das erste Informationsfeld anweist, dass das HARQ-ACK-Codebuch rückgemeldet werden soll, wobei die erste DCI verwendet wird, um eine eingeplante Zelle in den N Zellen einzuplanen, wobei das HARQ-ACK-Codebuch basierend auf dem Zielinformationsfeld in einem Fall bestimmt wird, in dem N Zellen nicht eingeplante Zellen umfassen, wobei N eine ganze Zahl größer als 1 ist;
**dadurch gekennzeichnet, dass** das Zielinformationsfeld einer ersten nicht eingeplanten Zelle in den nicht eingeplanten Zellen entspricht und das Zielinformationsfeld ein Frequenzbereichsressourcenzuweisungs-, FDRA,-Feld umfasst.

12. Vorrichtung zum Bestimmen von Rückmeldungsinformationen nach Anspruch 11, wobei die erste DCI ferner ein zweites Informationsfeld und ein drittes Informationsfeld umfasst, wobei das zweite Informationsfeld
die eingeplante Zelle in den N Zellen angibt und das dritte Informationsfeld Frequenzbereichsressourcenzuweisungsinformationen der eingeplanten Zelle angibt.

13. Vorrichtung zum Bestimmen von Rückmeldungsinformationen nach Anspruch 11, wobei das HARQ-ACK-Codebuch ein HARQ-ACK-Codebuch umfasst, das einer ersten Zeitbereichseinheit entspricht.

14. Vorrichtung zum Bestimmen von Rückmeldungsinformationen nach Anspruch 11, wobei die erste nicht eingeplante Zelle eine Zelle mit einem kleinsten Zellenindex in den nicht eingeplanten Zellen ist.

15. Vorrichtung zum Bestimmen von Rückmeldungsinformationen nach Anspruch 11, wobei ein Informationsfeld, das der ersten nicht eingeplanten Zelle entspricht, ein Modulations- und Codierschema-, MCS,-Feld umfasst.

**Revendications**

**1.** Procédé de détermination d'informations de rétroaction, applicable à un dispositif terminal, le procédé comprenant:

la réception de premières informations de commande de liaison descendante, DCI, (210), dans lequel les premières DCI comprennent un premier champ d'informations et un champ d'informations cible ; et
la détermination d'un livre de codes de demande de répétition automatique hybride de rétroaction, HARQ,-accusé de réception, ACK, sur la base du champ d'informations cible dans un cas où le premier champ d'informations indique qu'un livre de codes HARQ-ACK doit être renvoyé et N cellules comprennent des cellules non planifiées, dans lequel les premières DCI sont utilisées pour planifier une cellule planifiée parmi les N cellules, et N est un entier supérieur à 1 ; **caractérisé en ce que** le champ d'informations cible correspond à une première cellule non planifiée parmi les cellules non planifiées, et le champ d'informations cible comprend un champ d'attribution de ressources dans le domaine fréquentiel, FDRA.

**2.** Procédé selon la revendication 1, dans lequel les cellules non planifiées sont déterminées sur la base d'un deuxième champ d'informations et d'un troisième champ d'informations dans les premières DCI, dans lequel le deuxième champ d'informations indique la cellule planifiée parmi les N cellules, et le troisième champ d'informations indique des informations d'attribution de ressources dans le domaine fréquentiel de la cellule planifiée.

**3.** Procédé selon la revendication 1 ou 2, dans lequel la détermination du livre de codes HARQ-ACK de rétroaction sur la base du champ d'informations cible comprend :
la détermination, sur la base du champ d'informations cible, d'un livre de codes HARQ-ACK correspondant à une première unité de domaine temporel dans le livre de codes HARQ-ACK de rétroaction.

**4.** Procédé selon la revendication 1, dans lequel la première cellule non planifiée est une cellule ayant un indice de cellule le plus petit parmi les cellules non planifiées.

**5.** Procédé selon la revendication 1, dans lequel un champ d'informations correspondant à la première cellule non planifiée comprend un champ de schéma de modulation et de codage, MCS.

**6.** Appareil de détermination d'informations de rétroaction, comprenant :

un premier module de réception, (901), configuré pour recevoir des premières informations de commande de liaison descendante, DCI, dans lequel les premières DCI comprennent un premier champ d'informations et un champ d'informations cible ; et
un module de détermination, configuré pour déterminer un livre de codes de demande de répétition automatique hybride de rétroaction, HARQ-accusé de réception, ACK, sur la base du champ d'informations cible dans un cas où le premier champ d'informations indique qu'un livre de codes HARQ-ACK doit être renvoyé et N cellules comprennent des cellules non planifiées, dans lequel les premières DCI sont utilisées pour planifier une cellule planifiée parmi les N cellules, dans lequel N est un entier supérieur à 1; **caractérisé en ce que** le champ d'informations cible correspond à une première cellule non planifiée parmi les cellules non planifiées, et le champ d'informations cible comprend un champ d'attribution de ressources dans le domaine fréquentiel, FDRA.

**7.** Appareil de détermination d'informations de rétroaction selon la revendication 6, dans lequel les cellules non planifiées sont déterminées sur la base d'un deuxième champ d'informations et d'un troisième champ d'informations dans les premières DCI, dans lequel le deuxième champ d'informations indique la cellule planifiée parmi les N cellules, et le troisième champ d'informations indique des informations d'attribution de ressources dans le domaine fréquentiel de la cellule planifiée.

**8.** Appareil de détermination d'informations de rétroaction selon la revendication 6 ou 7, dans lequel le module de détermination est en outre configuré pour :
déterminer, sur la base du champ d'informations cible, un livre de codes HARQ-ACK correspondant à une première unité de domaine temporel dans le livre de codes HARQ-ACK de rétroaction.

**9.** Appareil de détermination d'informations de rétroaction selon la revendication 6, dans lequel la première cellule non planifiée est une cellule ayant un indice de cellule le plus petit parmi les cellules non planifiées.

**10.** Appareil de détermination d'informations de rétroaction selon la revendication 6, dans lequel un champ d'informations correspondant à la première cellule non planifiée comprend un champ de schéma de modulation et de codage, MCS.

**11.** Appareil de détermination d'informations de rétroaction, comprenant :

un deuxième module de transmission, (1010), configuré pour transmettre des premières informations de commande de liaison descendante, DCI, dans lequel les premières DCI comprennent un premier champ d'informations et un champ d'informations cible ; et
un deuxième module de réception, configuré pour recevoir un livre de codes de demande de répétition automatique hybride, HARQ-accusé de réception, ACK, dans un cas où le premier champ d'informations indique que le livre de codes HARQ-ACK doit être renvoyé, dans lequel les premières DCI sont utilisées pour planifier une cellule planifiée parmi les N cellules, le livre de codes HARQ-ACK est déterminé sur la base du champ d'informations cible dans un cas où N cellules comprennent des cellules non planifiées, dans lequel N est un entier supérieur à 1 ;
**caractérisé en ce que** le champ d'informations cible correspond à une première cellule non planifiée parmi les cellules non planifiées, et le champ d'informations cible comprend un champ d'attribution de ressources dans le domaine fréquentiel, FDRA.

**12.** Appareil de détermination d'informations de rétroaction selon la revendication 11, dans lequel les premières DCI comprennent en outre un deuxième champ d'informations et un troisième champ d'informations, dans lequel le deuxième champ d'informations indique la cellule planifiée parmi les N cellules, et le troisième champ d'informations indique des informations d'attribution de ressources dans le domaine fréquentiel de la cellule planifiée.

**13.** Appareil de détermination d'informations de rétroaction selon la revendication 11, dans lequel le livre de codes HARQ-ACK comprend un livre de codes HARQ-ACK correspondant à une première unité de domaine temporel.

**14.** Appareil de détermination d'informations de rétroaction selon la revendication 11, dans lequel la première cellule non planifiée est une cellule ayant un indice de cellule le plus petit parmi les cellules non planifiées.

**15.** Appareil de détermination d'informations de rétroaction selon la revendication 11, dans lequel un champ d'informations correspondant à la première cellule non planifiée comprend un champ de schéma de modulation et de codage, MCS.

110

120

UL
DL

FIG. 1

210

Receiving first DCI, wherein the first DCI includes a first information field and a target information field

230

Determining a feedback HARQ-ACK codebook based on the target information field in a case where the first information field instructs that an HARQ-ACK codebook be fed back and N cells include non-scheduled cells

FIG. 2

310

Receiving first DCI, wherein the first DCI includes a first information field and a target information field

330

Determining, based on the target information field, a carrier set or an HARQ process set corresponding to a feedback HARQ-ACK codebook in a case where the first information field instructs that an HARQ-ACK codebook be fed back and N cells include non-scheduled cells

FIG. 3

410

Receiving first DCI, wherein the first DCI includes a
first information field and a target information field

430

Determining, based on the target information field, an
HARQ-ACK codebook corresponding to a first time-
domain unit in a feedback HARQ-ACK codebook
based on the target information field in a case where
the first information field instructs that an HARQ-
ACK codebook be fed back and N cells include non-
scheduled cells

FIG. 4

510

Receiving first DCI

530

Determining a feedback HARQ-ACK
codebook

FIG. 5

610

Receiving configuration of K sets

630

Receiving first DCI

650

Determining a carrier set or an HARQ-ACK process set
corresponding to a feedback HARQ-ACK codebook

FIG. 6

710

Receiving first DCI

730

Determining, based on the target information field, an HARQ-
ACK codebook corresponding to a first time-domain unit in a
feedback HARQ-ACK codebook

FIG. 7

Transmitting first DCI, wherein the first DCI includes a first information field and a target information field    810

Receiving an HARQ-ACK codebook in a case where the first information field instructs that the HARQ-ACK codebook be fed back    830

FIG. 8

First receiving module    901

First determining module    902

First transmitting module    903

FIG. 9

Second transmitting module    1010

Second receiving module    1020

FIG. 10

Communication device 1100

Processor    1101

Transmitter    1103

Bus    1105

Receiver    1102

Memory    1104

FIG. 11

**EP 4 598 198 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220045801 A1